**Europäisches Patentamt**

**European Patent Office**

**Office européen des brevets**

(11) Veröffentlichungsnummer: **0 035 599**
**B1**

(12) **EUROPÄISCHE PATENTSCHRIFT**

(45) Veröffentlichungstag der Patentschrift:
**02.05.85**

(21) Anmeldenummer: **80108116.7**

(22) Anmeldetag: **22.12.80**

(51) Int. Cl.⁴: **H 02 M 3/155**

(54) **Verfahren zum transformatorischen Ansteuern eines als Stellglied arbeitenden Schalttransistors eines Gleichspannungswandlers.**

(30) Priorität: **07.03.80 DE 3008716**

(43) Veröffentlichungstag der Anmeldung:
**16.09.81 Patentblatt 81/37**

(45) Bekanntmachung des Hinweises auf die Patenterteilung:
**02.05.85 Patentblatt 85/18**

(84) Benannte Vertragsstaaten:
**BE DE FR GB IT**

(56) Entgegenhaltungen:
**DD - A - 127 005**
**DE - B - 1 438 211**
**DE - B - 2 547 352**
**DE - B - 2 603 174**

(73) Patentinhaber: **ANT Nachrichtentechnik GmbH,
Gerberstrasse 33, D-7150 Backnang (DE)**

(72) Erfinder: **Grünsch, Eckhardt, Im Blütengarten 14,
D-7151 Allmersbach im Tal (DE)**
Erfinder: **Wochele, Günter, Badwiesen 1,
D-7155 Oppenweiler (DE)**

(74) Vertreter: **Schickle, Gerhard, Dipl.-Ing. et al, ANT
Nachrichtentechnik GmbH Patent- und Lizenzabteilung
Gerberstrasse 33, D-7150 Backnang (DE)**

## Beschreibung

Die Erfindung betrifft ein Verfahren zum transformatorischen Ansteuern eines als Stellglied arbeitenden Schalttransistors eines Gleichspannungswandlers durch die gespeicherte Energie eines mit Primärwicklung und zwei Sekundärwicklungen versehenen Übertragers, wobei durch einen Taktgenerator mit Steuerschaltlogik Beginn und Ende der Durchflussphase des über den Übertrager angesteuerten Schalttransistors festgelegt werden und wobei die Primärwicklung des Übertragers durch eine aus der Eingangsspannung des Gleichspannungswandlers abgeleitete Spannung gespeist wird und in einer ersten Sekundärwicklung der Basisstrom für den Schalttransistor erzeugt wird. Schalttransistoren in Gleichspannungswandlern können auf unterschiedliche Arten angesteuert werden. Durch die transformatorische Ansteuerung kann die Ansteuerleistung am geringsten gehalten werden.

Aus der DE-PS 2 014 218 ist eine Steuerschaltung für einen als Stellglied arbeitenden Schalttransistor bekannt, dessen Durchlassphase mittels eines in einem Taktgenerator erzeugten Einschaltimpulses über einen Steuertransformator eingeleitet und der Basisstrom durch positive Rückkopplung des Stroms auf den Steuerkreis des Schalttransistors geliefert wird, wobei der Taktgenerator die Durchlassphase des Schalttransistors durch je einen kurzen Impuls entgegengesetzter Polarität steuert. Bei dieser Schaltung fliesst im Basiskreis ein für manche Anwendungsfälle zu hoher Basisstrom. Auch ist die Schaltung durch eine externe Steuergrösse, wie z. B. die Spannung am Lastwiderstand nur schwer zu beeinflussen.

Der Erfindung liegt daher die Aufgabe zugrunde, ein Verfahren zum transformatorischen Ansteuern eines Schalttransistors eingangs genannter Art anzugeben, dessen Schaltungsrealisierung wenig Verlustleistung erzeugt und sich durch externe Steuergrössen leicht und schnell beeinflussen lässt.

Erfindungsgemäss wird diese Aufgabe dadurch gelöst, dass im Sperrzustand des Schalttransistors der Energieaufnahmestrom der Primärwicklung nach Erreichen einer zur nachfolgenden Ansteuerung des Schalttransistors erforderlichen Energie abgeschaltet wird, dass die aufgenommene Energie durch Kurzschliessen der zweiten Sekundärwicklung bis zum Einschalten des Schalttransistors im Übertragerkern gespeichert wird, dass der Kurzschluss durch eine Steuerstufe erzeugt wird und dass nach Aufheben des Kurzschlusses durch ein Signal der Steuerschaltlogik die gespeicherte Energie des Übertragers an die erste Sekundärwicklung abgegeben wird, die damit den Schalttransistor in die Durchlassphase überführt.

Besonders vorteilhaft ist es, der Steuerschaltlogik als Schaltkriterium eine der Ausgangsspannung proportionale Grösse zuzuführen. Damit wird erreicht, dass der erfindungsgemässe Gleichspannungswandler schnell auf Laständerungen anspricht, indem der vom Taktgenerator gelieferte Takt in seiner Pulsbreite variiert wird.

Wenn der Energieaufnahmestrom der Primärwicklung erst bei Auftreten eines von der Steuerschaltlogik gelieferten Rückstellimpulses eingeschaltet wird, wirkt sich ein durch parasitäre Kapazitäten erzeugter Störimpuls oder der transformierte Ausräumstrom des Schalttransistors nicht nachteilig auf den Energieaufnahmestrom der Primärwicklung aus.

Wenn ein Rückstellimpuls von der Steuerschaltlogik oder vom Taktgenerator zu Beginn der halben Periodendauer des Einschaltzeitpunktes des Schalttransistors, der das Einschalten des Energieaufnahmestroms der Primärwicklung ermöglicht, oder etwas später geliefert wird, wird die Verlustenergie noch weiter vermindert. Die im Kern des Übertragers gespeicherte Energie kann sich nämlich wegen der kürzeren Energiespeicherzeit weniger stark abbauen.

Der Anspruch 5 enthält eine vorteilhafte Schaltungsanordnung zur Durchführung des Verfahrens.

Anhand der Figuren wird die Erfindung nun näher beschrieben. Dabei zeigt

Figur 1 eine erfindungsgemässe Schaltungsanordnung,

Figur 2a und b Stromverläufe einer erfindungsgemässen Schaltungsanordnung.

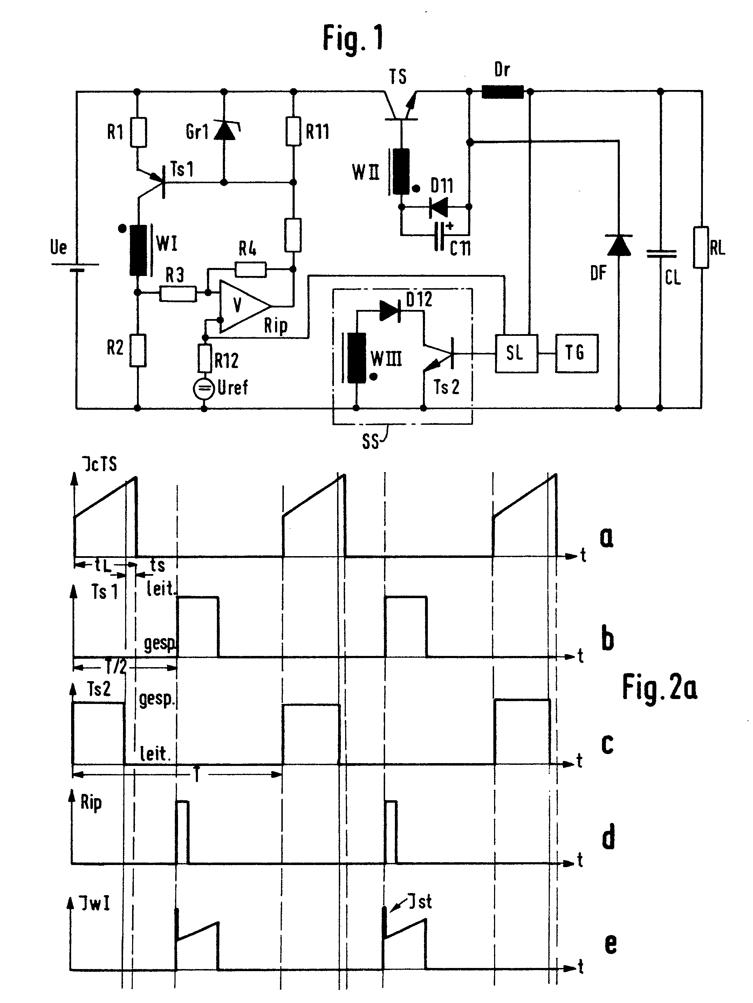

In Figur 1 liegt parallel zur Eingangsspannungsquelle Ue eine Reihenschaltung, bestehend aus Vorwiderstand R1, Kollektor-Emitterstrecke des ersten Transistors Ts1, Primärwicklung W1 des Übertragers und Strommesswiderstand R2. Der erste Transistor wirkt zusammen mit einer Zenerdiode Gr1 und Widerstand R11 als Konstantstromquelle. Der Schalttransistor TS des Gleichspannungswandlers liegt mit seiner Schaltstrecke zwischen Eingangsspannung Ue und Lastwiderstand RL über eine Glättungsdrossel Dr. Parallel zum Lastwiderstand RL liegt ein Ladekondensator CL. Eine Freilaufdiode DF verbindet den gemeinsamen Schaltungspunkt von Emitter des Schalttransistors TS und Glättungsdrossel Dr mit Masse. Die Basis des Schalttransistors TS wird durch eine Reihenschaltung aus erster Sekundärwicklung WII und mittels Diode D11 überbrücktem Entladekondensator C11 mit dem Emitter verbunden. Diese spezielle Schaltungsanordnung dient dazu, die Ladungsträger von TS während der Sperrphase von TS auszuräumen. Ein Taktgenerator TG liefert die Taktimpulse, aus denen Steuerimpulse zum Öffnen und Schliessen des Schalttransistors TS gewonnen werden. Falls der Gleichspannungswandler geregelt arbeiten soll, werden die Taktimpulse von TG in ihrer Pulsdauer durch die Steuerschaltlogik SL variiert. Als Schaltkriterium kann vorzugsweise die Ausgangsspannung herangezogen werden. Wie aus der Ausgangsspannung, dem Taktgenerator TG und der Steuerschaltlogik SL ein Ansteuersignal für die Steuerstufe SS gewonnen werden kann, ist aus der DE-OS 2 715 571 bekannt. Des weiteren ist aus dieser Veröffentlichung bekannt, einen Rückstellimpuls Rip aus der Steuerschaltlogik SL oder dem Taktgenerator TG zu gewinnen.

Die Kollektor-Emitterstrecke des Steuertransistors Ts2 liegt parallel zur Serienschaltung aus zweiter Sekundärwicklung WIII und Diode D12.

Die Funktion der Schaltung sei nun im folgenden erläutert.

Wenn von der Schaltlogik SL oder vom Taktgenerator TG das Signal zum Ausschalten des Schalttransistors TS kommt (Basisansteuerung von Ts2) wird der Steuertransistor Ts2 leitend – vergleiche Figur 2a, Zeile c – und die zweite Sekundärwicklung WIII des Übertragers wird kurzge-schlossen. Dies hat zur Folge, dass der Schalttransistor TS nach seiner Gesamtausschaltzeit ts (turn-off-time) gesperrt wird; vergleiche Figur 2a, Zeile a.

Nach dem Leitendwerden des Steuertransistors Ts2 fliesst im Stromkreis der Steuerstufe SS nur ein durch gespeicherte Restenergie hervorgerufe-ner Strom über WIII, D12 und Kollektor-Emitter-strecke von Ts2.

Trifft nun von der Steuerschaltlogik SL ein Rückstellimpuls Rip am invertierenden Eingang des bistabilen Vergleichsverstärkers V ein, so wird dieser zurückgestellt und schaltet damit den ersten Transistor Ts1 leitend. Aus der Eingangsspannungsquelle Ue fliesst dann ein Energieaufnahmestrom JWI über R1, den durchgeschalteten ersten Transistor Ts1, die Primärwicklung WI und den Strommesswiderstand R2. Über die Primärwicklung WI wird im Übertragerkern Energie gespeichert, vergleiche Figur 2a, Zeile e. Nach Erreichen einer zur späteren Ansteuerung des Schalttransistors TS nötigen Energie ist das Potential am nichtinvertierenden Eingang des bistabilen Vergleichsverstärkers V höher als das durch die Referenzspannung Uref vorgegebene Potential am invertierenden Eingang. Der Ausgang des bistabilen Vergleichsverstärkers V führt dadurch hohes Potential und hält über die Widerstände R3 und R4 diesen Zustand. Der erste Transistor Ts1 erhält dadurch keinen Basisstrom mehr und öffnet daher; Figur 2a, Zeile b.

Da die zweite Sekundärwicklung WIII durch Ts2 kurzgeschlossen wird, treten in diesem Stromkreis fast keine Verluste auf und die aufgenommene Energie wird gespeichert und bis zum Einschalten des Schalttransistors TS nur unwesent-lich abgebaut. Das Übersetzungsverhältnis WIII: WII muss dabei so gross gewählt werden, dass die in WII induzierte Spannung beim Kurzschlussbe-trieb von WIII nicht ausreicht, um den Schalttransistor TS aufzusteuern. Soll nun der Schalttransistor TS leitend werden, so wird der Transistor Ts2 durch ein Ausgangssignal der Steuerschaltlogik SL gesperrt. Die nun an WIII anstehende höhere Spannung wird in WII induziert und führt zum Aufsteuern des Schalttransistors TS. Der Übertrager hat während seiner Energieaufnahme so viel Energie gespeichert, dass diese ausreicht, um den Schalttransistor TS während seiner gesamten Durchflussphase leitend zu halten. Da der Strom durch die zweite Sekundärwicklung aufgrund des Übersetzungsverhältnisses relativ klein ist, entsteht während der Energiespeicherung (Ts2 leitend) nur wenig Verlustleistung. An WI kann keine Energie rückübertragen werden, da sich Ts1 noch im Sperrzustand befindet.

Vorteilhaft ist es, den Rückstellimpuls Rip – vergleiche Figur 2a, Zeile d – in der Mitte zwischen den Einschaltzeitpunkten von Schalttransistor TS zu gewinnen. Die Primärwicklung WI wird dann erst in der zweiten Hälfte der Sperrphase des Schalttransistors TS vom Energieaufnahmestrom JWI – vergleiche Figur 2a, Zeile e – durchflossen. Dem Übertrager bleibt dann wenig Zeit, um gespeicherte Energie zu verlieren.

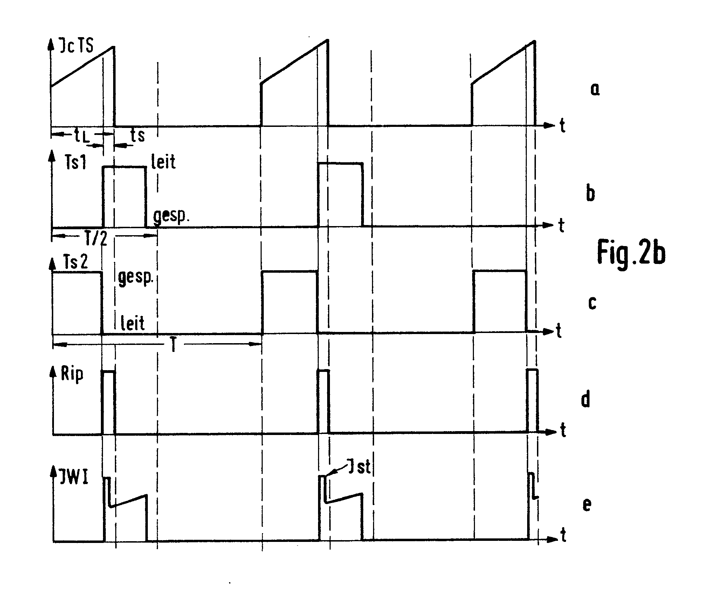

In Figur 2b ist eine Energieaufnahme zu einem anderen Zeitpunkt dargestellt. Wird der Rückstellimpuls Rip gerade während der Gesamtausschaltzeit ts (turn-off-time) des Schalttransistors TS gewonnen, ist der Vergleichsverstärker V noch blockiert. Er kann daher auf einen Störimpuls Jst, bei dem noch keine Energie aufgenommen wird, nicht ansprechen. Der Rückstellimpuls Rip geht nach Abschalten des Schalttransistors TS von hohem auf tiefes Potential, damit liegt der invertie-rende Eingang des bistabilen Vergleichsverstär-kers V über den Widerstand R12 nur an der Referenzspannung Uref.

Damit der Energieaufnahmestrom in der Primärwicklung WI des Übertragers während des Ausräumens der Ladungsträger aus der Basis-Emitterzone des Schalttransistors TS nicht auf einen zu hohen Wert ansteigen kann, wird der Strom durch die Strombegrenzungsschaltung, bestehend aus R1, Gr1, Ts1, begrenzt.

**Patentansprüche**

1. Verfahren zum transformatorischen Ansteuern eines als Stellglied arbeitenden Schalttransistors (TS) eines Gleichspannungswandlers durch die gespeicherte Energie eines mit Primärwicklung (WI) und zwei Sekundärwicklungen versehenen Übertragers, wobei durch einen Taktgenerator (TG) mit Steuerschaltlogik (SL) Beginn und Ende der Durchflussphase des über den Über-trager angesteuerten Schalttransistors (TS) fest-gelegt werden und wobei die Primärwicklung (WI) des Übertragers durch eine aus der Eingangs-spannung (Ue) des Gleichspannungswandlers ab-geleitete Spannung gespeist wird und in einer ersten Sekundärwicklung (WII) der Basisstrom für den Schalttransistor (TS) erzeugt wird, dadurch gekennzeichnet, dass im Sperrzustand des Schalttransistors (TS) der Energieaufnahmestrom der Primärwicklung (WI) nach Erreichen einer zur nachfolgenden Ansteuerung des Schalttransistors erforderlichen Energie abgeschaltet wird, dass die aufgenommene Energie durch Kurzschliessen der zweiten Sekundärwicklung (WIII) bis zum Einschalten des Schalttransistors (TS) im Übertragerkern gespeichert wird, dass der Kurzschluss durch eine Steuerstufe (SS) erzeugt wird und dass nach Aufheben des Kurzschlusses durch ein Signal der Steuerschaltlogik (SL) die gespeicherte Energie des Übertragers an die erste Sekundärwicklung (WII) abgegeben wird, die damit den Schalttransistor (TS) in die Durchlassphase überführt.

2. Verfahren nach Anspruch 1, dadurch gekennzeichnet, dass der Steuerschaltlogik (SL) zur Variation der Impulsdauer als Schaltkriterium eine der Ausgangsspannung proportionale Grösse zugeführt wird.

3. Verfahren nach Anspruch 1, dadurch gekennzeichnet, dass der Energieaufnahmestrom der Primärwicklung (WI) erst dann eingeschaltet wird, wenn ein Rückstellimpuls (Rip) von der Steuerschaltlogik (SL) geliefert wird.

4. Verfahren nach Anspruch 3, dadurch gekennzeichnet, dass von der Steuerschaltlogik (SL) oder vom Taktgenerator (TG) ein Rückstellimpuls (Rip) nach Ablauf der halben Periodendauer, gerechnet vom Einschaltpunkt des Schalttransistors (TS), oder etwas später geliefert wird.

5. Schaltungsanordnung zum Durchführen des Verfahrens nach Anspruch 1, wobei zwischen Emitter und Basis des Schalttransistors (TS) eine Reihenschaltung aus erster Sekundärwicklung (WII) des Übertragers und mittels Diode (D11) überbrücktem Entladekondensator (C11) liegt, dadurch gekennzeichnet, dass parallel zur Eingangsspannungsquelle (Ue) die Reihenschaltung aus Vorwiderstand (R1), Kollektor-Emitterstrecke eines den Energieaufnahmestrom abschaltenden ersten Transistors (Ts1), Primärwicklung (W1) des Übertragers und Strommesswiderstand (R2) angeordnet ist, dass der Schaltungspunkt zwischen Primärwicklung (WI) und Strommesswiderstand (R2) mittels eines ersten Widerstandes (R3) mit dem nichtinvertierenden Eingang eines den ersten Transistor (Ts1) blockierenden bistabilen Vergleichsverstärkers (V) verbunden ist, dass zwischen Ausgang und nichtinvertierenden Eingang des Vergleichsverstärkers (V) ein zweiter Widerstand (R4) geschaltet ist, dass der invertierende Eingang des bistabilen Vergleichsverstärkers (V) sowohl über einen dritten Widerstand (R12) mit einer Referenzspannungsquelle (Uref) als auch mit einem Ausgang der Steuerschaltlogik (SL) verbunden ist, dass die Emitter-Kollektorstrecke eines Steuertransistors (Ts2) der Steuerstufe (SS) parallel zur zweiten Sekundärwicklung (WIII) geschaltet ist und dass die Basis des Steuertransistors (Ts2) mit der Steuerschaltlogik (SL) verbunden ist.

**Claims**

1. Method for the transformer-coupled drive of a switching transistor (TS), operating as setting member, of a direct voltage converter through the stored energy of a transformer provided with primary winding (WI) and two secondary windings, wherein beginning and end of the conductive phase of the switching transistor (TS) driven through the transformer are fixed through a timing generator (TG) with a control switch logic unit (SL) and wherein the primary winding (WI) of the transformer is fed by a voltage derived from the input voltage (Ue) of the direct voltage converter and the base current for the switching transistor (TS) is generated in a first secondary winding (WII), characterised thereby, that the energy-build-up current of the primary winding (WI) in the blocked state of the switching transistor (TS) is switched off after the attainment of an energy required for the following drive of the switching transistor, that the energy taken up is stored in the transformer core through short-circuiting of the second secondary winding (WIII) until the switching-on of the switching transistor (TS), that the short-circuit is produced through a control stage (SS) and that the stored energy of the transformer is delivered after cancellation of the short circuit through a signal of the control switch logic unit (SL) to the first secondary winding (WII), which thereby transfers the switchin transistor (TS) into the conductive phase.

2. Method according to claim 1, characterised thereby, that a magnitude proportional to the output voltage is conducted as switching criterion to the control switch logic unit (SL) for variation of the pulse duration.

3. Method according to claim 1, characterised thereby, that the energy-build-up current of the primary winding (WI) is switched on only when a resetting pulse (Rip) is supplied from the control switch logic unit (SL).

4. Method according to claim 3, characterised thereby, that a resetting pulse (Rip) is delivered from the control switch logic unit (SL) or from the timing generator (TG) either after run-down of half the period duration, reckoned from the switch-on point of the switching transistor (TS), or somewhat later.

5. Circuit arrangement for the performance of the method according to claim 1, wherein a series connection of first secondary winding (WII) of the transformer and discharge capacitor (C11) bridged over by means of diode (D11) lies between emitter and base of the switching transistor (TS), characterised thereby, that the series connection of input resistor (R1), collector-emitter path of a first transistor (Ts1) switching off the energy-build-up current, primary winding (W1) of the transformer and current measuring resistor (Rs) is arranged in parallel with the input voltage source (Ue), that the circuit point between primary winding (WI) and current measuring resistor (R2) is connected by means of a first resistor (R3) with the non-inverting input of a bistable comparison amplifier (V) blocking the first transistor (Ts1), that a second resistor (R4) is connected between output and non-inverting input of the comparison amplifier (V), that the inverting input of the bistable comparison amplifier (V) blocking the first transistor (Ts1), that a second resistor (R4) is connected between output and non-inverting input of the comparison amplifier (V), that the inverting input of the bistable comparison amplifier (V) is connected through a third resistor (R12) with a reference voltage source (Uref) as well as also with an output of the control switch logic unit (SL), that the emitter-collector path of a control transistor (Ts2) of the control stage (SS) is connected in parallel with the second secondary winding (WIII) and that the base of the control transistor (Ts2) is connected with the control switch logic unit (SL).

## Revendications

1. Procédé de commande par transformation d'un transistor de commutation (TS) fonctionnant en organe de réglage dans un convertisseur de tension continue, à l'aide de l'énergie emmagasinée dans un transformateur comportant un enroulement primaire (WI) et deux enroulements secondaires, une horloge (TG) avec logique de commutation (SL) fixant le début de la fin de la phase de conduction du transistor de commutation (TS) commandé par le transformateur, dont l'enroulement primaire (WI) est alimenté par une tension dérivée de la tension d'entrée (Ue) du convertisseur de tension continue et dont le premier enroulement secondaire (WII) délivre le courant de base du transistor de commutation (TS), ledit procédé étant caractérisé en ce que dans l'état bloqué du transistor de commutation (TS), le courant absorbé par l'enroulement primaire (WI) est coupé quand l'énergie nécessaire à la commande ultérieure du transistor de commutation est atteinte; l'énergie absorbée est emmagasinée, par court-circuitage du second enroulement secondaire (WII), dans le noyau du transformateur jusqu'au branchement du transistor de commutation (TS); le court-circuit est produit par un étage de commande (SS); et, après la suppression du court-circuit par un signal de la logique de commutation (SL), l'énergie emmagasinée dans le transformateur est délivrée au premier enroulement secondaire (WII), qui fait ainsi passer le transistor de commutation (TS) dans la phase de commutation.

2. Procédé selon revendication 1, caractérisé en ce qu'une grandeur proportionnelle à la tension de sortie constitue le critère de commutation appliqué à la logique de commutation (SL), pour faire varier la durée des impulsions.

3. Procédé selon revendication 1, caractérisé en ce que le courant absorbé par l'enroulement primaire (WI) est branché uniquement quand une impulsion de remise à zéro (Rip) est délivrée par la logique de commutation (SL).

4. Procédé selon revendication 3, caractérisé en ce qu'une impulsion de remise à zéro (Rip) est délivrée par la logique de commutation (SL) ou l'horloge (TG) après la fin de la première alternance, calculée depuis le point de branchement du transistor de commutation (TS), ou un peu plus tard.

5. Montage pour la mise en œuvre du procédé selon revendication 1, le couplage en série du premier enroulement secondaire (WII) du transformateur et d'un condensateur de décharge (C11), shunté par une diode (D11), étant inséré entre l'émetteur et la base du transistor de commutation (TS), ledit montage étant caractérisé en ce que la source de tension d'entrée (Ue) étant parallèle avec le couplage en série d'une résistance additionnelle (R1), du circuit collecteur-émetteur d'un premier transistor (Ts1) coupant le courant absorbé, de l'enroulement primaire (WI) du transformateur et d'une résistance de mesure du courant (R2); le point de connexion de l'enroulement primaire (WI) à la résistance de mesure du courant (R2) est relié par une première résistance (R3) à l'entrée non-inverseuse d'un amplificateur-comparateur bistable (V) bloquant le premier transistor (Ts1); une deuxième résistance (R4) est branchée entre la sortie et l'entrée non-inverseuse de l'amplificateur-comparateur (V); l'entrée inverseuse de l'amplificateur-comparateur bistable (V) est reliée à une source de tension de référence (Uref), par une troisième résistance (R12), et à une sortie de la logique de commutation (SL); le circuit émetteur-collecteur d'un transistor de commande (Ts2) de l'étage de commande (SS) est couplé en parallèle avec le second enroulement secondaire (WIII); et la base du transistor de commande (Ts2) est reliée à la logique de commutation (SL).

# Fig. 1

# Fig. 2a

Fig.2b